# EUROPEAN PATENT SPECIFICATION

(11) **EP 2 513 182 B1**
(45) Date of publication and mention of the grant of the patent: **23.01.2019**
(21) Application number: 10795566.8
(22) Date of filing: 14.12.2010
(51) Int. Cl.: C08G 101/00, C08G 18/48, C08G 18/63, C08G 18/12, C08G 18/32

(54) **POLYURETHANE FOAM WITH SOFT SURFACE TOUCH**
POLYURETHANSCHAUMSTOFF MIT SOFT-TOUCH-OBERFLÄCHE
MOUSSE POLYURÉTHANE À SURFACE DOUCE AU TOUCHER

(30) Priority: 17.12.2009 US 287299 P
(43) Date of publication of application: 24.10.2012
(73) Proprietor: Dow Global Technologies LLC, Midland, MI 48674 (US)
(72) Inventor: BENVENUTI, Andrea, I-42015 Correggio (Reggio Emilia) (IT)
(74) Representative: Beck Greener
(86) International application number: PCT/US2010/060257
(87) International publication number: WO 2011/084413

(56) References cited:
- EP-A1- 1 170 314
- WO-A1-99/33893
- DE-A1- 4 032 148
- US-A- 4 559 366

## Description

### BACKGROUND

### 1. Field of the Invention

The present invention relates to the field of polyurethane foams. More particularly, it relates to the field of polyurethane foams having improved surface properties and compressive strength.

### 2. Background of the Art

It is well known that polyurethane foams may be obtained by the reaction of an isocyanate component with an active hydrogen-containing component such as, for example, a polyester or polyether polyol and, optionally, a blowing agent. For processing convenience it is, in certain circumstances, advantageous to use, as the isocyanate component, an isocyanate-terminated prepolymer. Such prepolymer may be prepared by, for example, the reaction of an excess of an aromatic diisocyanate with a relatively low molecular weight diol such as, for example, dipropylene glycol and/or tripropylene glycol. The blowing agent may be an inert physical blowing agent such as, for example, a chloroflorocarbon compound, and/or a reactive blowing agent, such as, for example, water. The preparation of polyurethane foams by such procedures is described in, for example, patent publications EP 235,888; EP 175,733; and U.S. Patents 3,591,532; 3,901,959; 4,647,596; and 4,757,095.

Current manufacturing trends for polyurethane foams are driven by two dominant factors, namely, cost and environmental concern. Consideration of cost and superior humid ageing performance leads polyurethane foam producers to select polyether polyols over polyester polyols, while consideration of environmental issues leads such producers to select water in preference to certain physical blowing agents. However, use of water as a blowing agent may compromise certain properties, such as low temperature durability, hardness and processability. Some of these problems may be mitigated by using an isocyanate-terminated prepolymer prepared by reaction of an excess of an aromatic diisocyanate with a relatively high molecular weight polyether diol or triol.

"Touch," as used herein, refers to how a polyurethane product feels to the hand, also called its "hand feeling," which is a combination of surface hardness compressive strength and resilience. A combination of the above mentioned properties has to be used to describe the touch feeling of the material. The term "touch" may therefore be used to generally describe the comfort and cushioning properties of the polyurethane foam in certain applications requiring at least specified levels of each. One particular example of this is the footwear soling industry, which desires a material that feels soft, that is, has a low surface hardness, but that at the same time offers good support, that is, has good resilience. Heretofore, this need has frequently been addressed by employing thermoplastic styrene-butadiene-styrene rubber, alternatively termed "TPR." While TPR has a good "touch" that is sought or preferred by many customers, and relatively easy processability, it is unfortunately relatively expensive to produce in comparison with polyurethane foams. As such, it is desired in the art to produce polyurethane foam that can offer a touch that is similar or comparable to that of high quality TPR compounds. TPR and vulcanized rubber ("VR") may be generally described as compact elastomers having a density greater than 1.0 gram per cubic centimeter (g/cc).

However, there remains a need in the art to develop more formulations and compositions having a desirable touch, that are less expensive than TPR or VR but which may be used in similar applications, such as for shoe soles.

### SUMMARY OF THE INVENTION

In one aspect the present invention provides a formulation for preparing a polyurethane foam comprising (a) a polyol component including at least (i) from 1 to 40 weight percent (wt%), based on the polyol component, of a first polyether polyol, having a hydroxyl value from 25 to 30, a nominal functionality of 3, and a molecular weight of from 5000 to 7000 grams per mole (g/mol), the first polyether polyol being prepared from propylene oxide capped with ethylene oxide and having from 70 to 90 wt% primary hydroxyl groups; (ii) from 10 to 60 wt%, based on the polyol component, of a second polyether polyol, having a hydroxyl value of from 25 to 30, a nominal functionality of 2, and a molecular weight of from 3000 to less than 5000 g/mol, the second polyether polyol being prepared from propylene oxide capped with ethylene oxide and having from 80 to 98 wt% of primary hydroxyl groups; (iii) from 2 to 7 wt%, based on the polyol component, of monoethylene glycol, butanediol, hexanediol or neopentylglycol as a chain extender; and (iv) from 25 to 65 wt%, based on the polyol component, of a copolymer polyether polyol having a styrene acrylonitrile solids content of at least 40 wt% and an average hydroxyl number of at least 18; (b) an isocyanate component, comprising a prepolymer having an isocyanate equivalent weight of from 180 to 300, prepared by reacting a monomeric 4,4' diphenylmethane-diisocyanate and an isocyanate-reactive component; and (c) water as a blowing agent.

In another aspect the invention provides a process for preparing a polyurethane foam comprising reacting under foam-forming conditions (a) a polyol component including at least (i) from 1 to 40 wt%, based on the polyol component, of a first polyether polyol, having a hydroxyl value from 25 to 30, a nominal functionality of 3, and a molecular weight of from 5000 to 7000 g/mol, the first polyether polyol being prepared from propylene oxide capped with ethylene oxide and having from 70 to 90 wt% primary hydroxyl groups; (ii) from 10 to 60 wt%, based on the polyol component, of a second polyether polyol, having a hydroxyl value of from 25 to 30, a nominal functionality of 2, and a molecular weight of from 3000 to less than 5000 g/mol, the second polyether polyol being prepared from propylene oxide capped ethylene oxide and having from 80 to 98 wt% primary hydroxyl groups; (iii) from 2 to 7 wt%, based on the polyol component, of mono-ethylene glycol, butanediol, hexanediol or neopentylglycol as a first chain extender; and (iv) from 25 to 65 wt%, based on the polyol component, of a copolymer polyether polyol having a styrene acrylonitrile solids content of at least 40 wt% and an average hydroxyl number of at least 18; (b) an isocyanate component, comprising a prepolymer having an isocyanate equivalent weight of from 180 to 300, prepared by reacting a monomeric 4,4' diphenylmethane-diisocyanate and an isocyanate-reactive component; and (c) water as a blowing agent; to form a polyurethane foam.

In still another aspect described herein is a polyol component suitable for use in preparing a polyurethane foam, comprising at least (i) from 1 to 40 wt%, based on the polyol component, of a first polyether polyol, having a hydroxyl value from 25 to 30, a nominal functionality of 3, and a molecular weight of from 5000 to 7000 g/mol, the first polyether polyol being prepared from propylene oxide capped with ethylene oxide and having a 70 to 90 wt% primary hydroxyl groups; (ii) from 10 to 60 wt%, based on the polyol component, of a second polyether polyol, having a hydroxyl value of from 25 to 30, a nominal functionality of 2, and a molecular weight of from 3000 to less than 5000 g/mol, the second polyether polyol being prepared from propylene oxide capped with ethylene oxide and having from 80 to 98 wt% primary hydroxyl groups; (iii) from 2 to 7 wt%, based on the polyol component, of monoethylene glycol, butanediol, hexanediol, or neopentyl glycol as a chain extender; and (iv) from 25 to 65 wt%, based on the polyol component, of a copolymer polyether polyol having a styrene acrylonitrile solids content of at least 40 wt% and an average hydroxyl number of at least 18.

In yet another aspect the invention provides a polyurethane foam having, at a density of 550 grams per liter (g/L), a Shore A surface hardness of not greater than 50; a storage modulus of less than 6.0 MPa; a resistance to compression at 5% of the deformation of less than 85 kPa; a resistance to compression at 25% of the deformation of greater than 410 kPa; a flex fatigue resistance at -15°C of greater than 100 Kcycles; and a tensile strength of greater than 4.00 N/mm².

### DETAILED DESCRIPTION OF THE EMBODIMENTS

The polyurethane foam disclosed herein may be characterized in many embodiments as having a density of from 500 to 700 grams per liter (g/L), desirably from 550 to 650 g/L, and in certain particularly preferred embodiments from 550 to 600 g/L. It may be further characterized in having a surface hardness (Shore A) from 42 to 50, and in certain non-limiting embodiments from 46 to 48. It may be still further characterized as having a compressive strength, as measured by the compression load deflection (CLD) test (ISO 3386-2), at 5 percent deflection, ranging from 30 kilopascals (kPa) to 90 kPa, and in certain embodiments ranging from 50 kPa to 80 kPa. This combination of relatively low surface hardness, low scale deformation (compressive strength at 5 percent (%)) with rapidly increasing resistance to compression (compressive strength at 25%) and resilience (measured through the ball rebound) above 40% produces a rubber-like "touch." An alternative way to describe this is to define polymer behavior under dynamic conditions by means of Dynamic Mechanical Analysis (DMA). This well-known technique measures storage modulus (SM), which is a direct expression of the hard segment content of the polymer.

Without wishing to be bound by any theory or hypothesis concerning the operation of the materials used in the inventive formulation, it is suggested hat a rubber-like "touch" may be obtained only when the hard segment content is lower when compared to a heretofore conventional PU formulation used in footwear applications. The very low fraction of the chain extender, in combination with the significant inclusion of the copolymer polyol, helps to ensure a desirably low hard segment fraction, as well as the excellent resilience and load bearing of the inventive foams.

The polyurethane foam may be prepared by reacting, desirably, a urethane-modified polyisocyanate, as the isocyanate component, and a polyol component that comprises at least four constituents. These include a first polyether polyol having a hydroxyl value from 25 to 30, a nominal functionality of 3, and a molecular weight of from 5000 to 7000 g/mol; a second polyether polyol, having a hydroxyl value of from 25 to 30, a nominal functionality of 2, and a molecular weight of from 3000 to less than 5000 g/mol; monoethylene glycol, butanediol, hexanediol, neopentyl glycol, or a combination thereof as a chain extender; and a copolymer polyether polyol having a styrene acrylonitrile solids content of at least 40 wt% and an average hydroxyl number of at least 18. These four components react to impart, in certain embodiments, the desired surface hardness and resilience characteristics that meet the target properties shown in Table 1 in the Examples section hereinbelow. Because of this, the formulations and products of the present invention may find particular application in, in non-limiting example, the footwear industry.

The first polyether polyol, a triol, may be selected from any that meet the requirements defined hereinabove. In addition to hydroxyl value, functionality and molecular weight as already noted hereinabove, such polyether polyol is prepared such that it has from 70 to 90 wt% primary hydroxyl groups. In order to accomplish this, the polyether polyol may be prepared from, in non-limiting example, 85 wt% of polymerized propylene oxide, which has been capped with 15 wt% of ethylene oxide. Preparation of such is well-known to those skilled in the art and generally includes polymerization of the propylene oxide using a hydroxyl- or amine-containing initiator, followed by capping with ethylene oxide. Both addition polymerizations are normally carried out in the presence of one or more suitable base catalysts, in bulk or in solvent or dispersion. Reaction in solvent is frequently preferred for ease of mixing and temperature control. Examples of suitable solvents or dispersants are methanol, tetrahydrofuran, toluene, and the like. The use of a solvent or dispersant may serve to facilitate subsequent removal of the catalyst or residues from the final polyol. In proportion, sufficient ethylene oxide is added to convert at least some and preferably all of the secondary hydroxyls of the polymerized propylene oxide end-groups to primary hydroxyls. Such reaction, including both the initial polymerization of the propylene oxide and the ethylene oxide end-capping, is desirably conducted under inert conditions, such as under nitrogen, argon or helium, and in closed vessels or reactors. such vessels or reactors should be suitably equipped with heating and cooling means, stirrers, and charging and discharging means. A variety of methodologies is widely known in the art and are also discussed in, for example, U.S. Patent 3,829,505.

The second polyether polyol, having a hydroxyl value of from 25 to 30, a nominal functionality of 2, and a molecular weight of from 3000 to less than 5000 g/mol, may be prepared similarly to the first polyether polyol, as described hereinabove. However, this second polyether polyol may include a higher proportion of ethylene oxide capping, for example, 20 wt%, which may lead to a wt% ratio of propylene oxide to ethylene oxide of 80/20, which helps to achieve the 90 to 98 wt% primary hydroxyl groups. The second polyether polyol also has a lower molecular weight. It, too, is based on propylene oxide, but it is a diol.

The polyol component further includes monoethylene glycol, butanediol, including the isomers thereof, hexanediol, neopentylglycol, or a combination thereof as a chain extender. 1,4-butanediol may, for example, be prepared by reaction of acetylene with formaldehyde to form 1,4-butynediol in an example of Reppe chemistry, followed by hydrogenation to form 1,4-butanediol.

The last required ingredient of the polyol component is a copolymer polyol. This copolymer polyol may be generally defined as having at least 40 wt% of styrene acrylonitrile solids and an average hydroxyl number of at least 18. In general, copolymer polyols may be produced by polymerizing one or more ethylenically unsaturated monomers dissolved or dispersed in a polyol (called the "carrier" or "feedstock polyol") in the presence of a free radical catalyst to form a stable dispersion of polymer particles in the polyol.

In one embodiment a suitable copolymer polyol is SPECFLEX™ NC 700, available from The Dow Chemical Company. This copolymer polyol contains 42 wt% of styrene acrylonitrile solids, has an average hydroxyl number of 20, and is based on a 4800 molecular weight (MW) glycerine-initiated triol as its carrier.

In another embodiment a suitable copolymer polyol is one containing 45 wt% of styrene acrylonitrile solids, having an average hydroxyl number of 18, based on a 4000 MW dipropylene glycol-initiated diol as its carrier.

In yet another embodiment a suitable copolymer polyol is one containing 60 wt% of styrene acrylonitrile solids, having an average hydroxyl number of 28, which is based on a 2000 MW dipropylene glycol-initiated diol which has been prepared with propylene oxide and then capped with 21 wt% of ethylene oxide.

Those skilled in the art will understand that other copolymer polyols falling within the definition of suitable copolymer polyols may be used in the inventive formulations and compositions. It will also be understood that a number of combinations of the two polyether polyols, along with the chain extender and copolymer polyol, may be employed. For example, in one embodiment the polyol component includes a branched diol or triol having a molecular weight from 60 to 300 g/mol, and a polyoxyalkylene polyol having an average functionality from 2 to 4 and a molecular weight from 3000 to 9000 g/mol. In this case the diol or triol and the polyoxyalkylene polyol may be present in a parts by weight ratio of from 0.01:1 to 0.25:1.

In order to prepare the polyurethane foam it is necessary to react the polyol component with an organic isocyanate component comprising a prepolymer having an isocyanate equivalent weight of from 180 to 300, prepared by reacting a monomeric 4,4'-diphenylmethane-diisocyanate and an isocyanate reactive compound. Other polyisocyanates described herein include aliphatic, cycloaliphatic, araliphatic, or aromatic polyisocyanates, or combinations thereof. Such may include, for example, alkylene diisocyanates, particularly those having from 4 to 12 carbon atoms in the alkylene moiety, such as 1,12-dodecane diisocyanate, 2-ethyltetramethylene 1,4-diisocyanate, 2-methyl-pentamethylene 1,5-diisocyanate, 2-ethyl-2-butylpentamethylene 1,5-diisocyanate, tetramethylene 1,4-diisocyanate and preferably hexamethylene 1,6-diisocyanate; cycloaliphatic diisocyanates, such as cyclohexane 1,3- and 1,4-diisocyanate and any desired mixture of these isomers, 1-isocyanato-3,3,5-trimethyl-5-isocyanato-methylcyclohexane (isophorone diisocyanate), 2,4- and 2,6-hexahydrotolylene diisocyanate, and the corresponding isomer mixtures, 4,4-, 2,2'- and 2,4'-dicyclohexylmethane diisocyanate and the corresponding isomer mixtures, araliphatic diisocyanates, for example, 1,4-xylylene diisocyanate and xylylene diisocyanate isomer mixtures, and preferably aromatic diisocyanates and polyisocyanates, for example, 2,4- and 2,6-tolylene diisocyanate and the corresponding isomer mixtures, 4,4'-, 2,4'- and 2,2'-diphenylmethane diisocyanate and the corresponding isomer mixtures, mixtures of 4,4'- and 2,4'-diphenylmethane diisocyanates, polyphenyl-polymethylene polyisocyanates, mixtures of 4,4'-, 2,4'- and 2,2'-diphenylmethane diisocyanates and polyphenyl-polymethylene polyisocyanates (crude MDI), and mixtures of crude MDI and tolylene diisocyanates. The organic diisocyanates and polyisocyanates may be employed individually or in the form of combinations thereof. The isocyanate component is, in certain particular embodiments, desirably a prepolymer, that is, a urethane-modified polyisocyanate, and in other non-limiting embodiments is a urethane-modified aromatic polyisocyanate such as a prepolymer prepared from 4,4'-diphenylmethane diisocyanate.

The organic polyisocyanates described herein may be prepared by known processes. They are preferably prepared by phosgenation of the corresponding polyamines with formation of polycarbamoyl chlorides, followed by thermolysis of the polycarbamoyl chlorides to produce the organic polyisocyanate and hydrogen chloride. Alternatively, they may be prepared by phosgene-free processes, such as, for example, by reacting the corresponding polyamines with urea and alcohol to give polycarbamates, followed by thermolysis of the polycarbamates to produce the polyisocyanate and alcohol.

Where the polyisocyanates are to be modified, groups such as esters, ethers, ureas, biurets, allophanates, uretoneimines, carbodiimides, isocyanurates, uretidiones and/or urethanes may be added thereto. One example product is a urethane-containing organic, preferably aromatic, polyisocyanate containing from 33.6 to 15 wt%, preferably from 31 to 21 wt%, of NCO, based on the total weight. Preparation begins with 4,4'-diphenylmethane diisocyanate, 4,4'- and 2,4'-diphenylmethane diisocyanate mixtures, or crude MDI or 2,4- or 2,6 -tolylene diisocyanate, which are then modified by means of reaction with diols, triols, dialkylene glycols, trialkylene glycols or polyoxyalkylene glycols having molecular weight of up to 6,000 g/mol. Specific examples of di- and polyoxyalkylene glycols, which may be employed individually or as mixtures for this purpose, are diethylene, dipropylene, polyoxyethylene, polyoxypropylene and polyoxy-propylene-polyoxyethylene glycols, triols and/or tetrols. NCO-containing prepolymers containing from 25 to 3.5 wt%, preferably from 21 to 14 wt%, of NCO, based on the total weight, may be prepared from the polyether polyols described hereinabove reacted with 4,4'-diphenylmethane diisocyanate, mixtures of 2,4'- and 4,4'-diphenylmethane diisocyanate, 2,4- and/or 2,6-tolylene diisocyanates, or crude MDI. Furthermore, liquid polyisocyanates containing carbodiimide groups and/or isocyanurate rings and containing from 33.6 to 15 wt%, preferably from 31 to 21 wt%, of NCO, based on the total weight, for example, based on 4,4'-, 2,4'- and/or 2,2'-diphenylmethane diisocyanate and/or 2,4' and/or 2,6-tolylene diisocyanate, may also be selected.

The modified polyisocyanates may be mixed with one another or with unmodified organic polyisocyanates, such as, for example, 2,4'- or 4,4'-diphenylmethane diisocyanate, crude MDI, and/or 2,4- and/or 2,6-tolylene diisocyanate. In certain embodiments the isocyanate component may be prepared by reacting a monomeric 4,4' diphenylmethane-diisocyanate and an isocyanate-reactive component comprising an ethylene oxide-capped diol having a molecular weight of 4000; an ethylene oxide-capped triol having a molecular weight of 6000; and a second chain extender including dipropylene glycol, tripropylene glycol, or a mixture thereof; under conditions suitable to form a prepolymer. This prepolymer is then reacted with the polyol component and a blowing agent to make the final polyurethane foam. In particular embodiments prepolymers having an isocyanate equivalent weight from 180 to 300 maybe especially useful.

Organic polyisocyanates described herein include mixtures of modified organic polyisocyanates containing urethane groups, having an NCO content of from 33.6 to 15 wt%, in particular those based on tolylene diisocyanate, 4,4'-diphenylmethane diisocyanate, diphenylmethane diisocyanate isomer mixtures or crude MDI, in particular 4,4'-, 2,4'- and 2,2'-diphenylmethane diisocyanate, polyphenyl-polymethylene polyisocyanates, 2,4- and 2,6-tolylene diisocyanate, crude MDI having a diphenylmethane diisocyanate isomer content of from 30 to 80 wt%, preferably from 35 to 45 wt%, and mixtures of at least two of the above-indicated polyisocyanates, for example, crude MDI or mixtures of tolylene diisocyanates and crude MDI.

The formulation of the invention also includes at least one blowing agent, which is water. The amount of water may range from 0.05 to 0.6 parts by weight (pbw), based on 100 parts of polyol. In certain particular and non-limiting embodiments, the amount may range from 0.1 to 0.5 pbw, and in other non-limiting embodiments may range from 0.15 to 0.45 pbw, on the same basis.

A second physical blowing agent may also be included in the formulation. Among possible selections thereof are cycloalkanes, including, in particular, cyclopentane, cyclohexane, and mixtures thereof; other cycloalkanes having a maximum of 4 carbon atoms; dialkyl ethers, cycloalkylene ethers, fluoroalkanes, and mixtures thereof. Specific examples of alkanes are, for example, propane, n-butane, isobutane, n- and iso-pentane and technical-grade pentane mixtures, cycloalkanes, for example, cyclobutane; dialkyl ethers, for example, dimethyl ether, methyl ethyl ether, methyl butyl ether and diethyl ether; cycloalkylene ethers, for example, furan; and fluoroalkanes, which are believed to be broken down in the troposphere and therefore are presently assumed to not damage the ozone layer, for example, trifluoromethane, difluoromethane, difluoroethane, tetrafluoroethane, and heptafluoropropane.

Where a second physical blowing agent is included with the water, the following combinations may be suitable in certain embodiments: water and cyclopentane, water and cyclopentane or cyclohexane, or a mixture of these cycloalkanes and at least one compound from the group consisting of n-butane, isobutane, n- and iso-pentane, a technical-grade pentane mixture, cyclobutane, methyl butyl ether, diethyl ether, furan, trifluoromethane, difluoromethane, difluoroethane, tetrafluoroethane, and heptafluoropropane.

Other suitable non-chlorofluorocarbon physical blowing agents are blowing agent-containing emulsions having a long shelf life, which contain at least one low-boiling, fluorinated or perfluorinated hydrocarbon having from 3 to 8 carbon atoms, which is sparingly soluble or insoluble in any of the required formulation components, sulfur hexafluoride or mixtures thereof, and at least one formulation component, as described in EP-A-0 351 614, or emulsions of mixtures of the above mentioned low-boiling, fluorinated or perfluorinated hydrocarbons having 3 to 8 carbon atoms which are sparingly soluble or insoluble in the formative components, and at least one isoalkane having 6 to 12 carbon atoms or cycloalkane having 4 to 6 carbon atoms or cycloalkane having 4 to 6 carbon atoms and at least one formative component, for example, as described in DE-A-41 43 148.

The proportions of the first and second polyether polyols, the chain extender, and the copolymer polyol may be varied within specified ranges while still facilitating production of a product that may exhibit the improvements of the invention. For example, the first polyether polyol may range from 1 to 40 wt%, based on the weight of the polyol component as a whole, and in certain non-limiting embodiments may range from 20 to 30 wt%, on the same basis. The second polyether polyol may range from 10 to 60 wt%, and in certain non-limiting embodiments may range from 10 to 40 wt%, on the same basis. The chain extender is included in very minor amount, ranging from 2 to 7 wt%. Finally, the copolymer polyol may range from 25 to 65 wt%, and in certain non-limiting embodiments may range from 30 to 60 wt%, on the same basis.

The amount of blowing agent will depend on the course of the boiling-point curve of the mixture and may be determined experimentally by known methods. However, in certain embodiments polyurethane foams having desirable densities may be obtained where the blowing agent is cyclopentane, in an amount from 0.5 to 3 pbw, and preferably from 1 to 2.5 pbw, more preferably from 1.5 to 2.0 pbw, based on 100 parts of the polyol formulation, combined with water in an amount of from 0 to 0.6 pbw, preferably from 0.1 to 0.5 pbw, and particularly from 0.2 to 0.45 pbw, on the same basis. Where a low-boiling compound which is homogeneously miscible with both the cyclopentane or cyclohexane is included, for example, an alkane, cycloalkane having a maximum of 4 carbon atoms, dialkyl ether, cycloalkylene ether, or fluoroalkane, such is desirably employed in an amount from 0.5 to 3 pbw, and more preferably from 1 to 2 pbw.

In order to produce the foamed polyurethanes of the invention, the water and, where desired, additional physical blowing agent are introduced via known methods into at least one of the formulation components prior to initiation of the final reaction. Introduction into such component may be carried out under pressure if desired. It is also possible to introduce the blowing agent or blowing agent mixture directly into the reaction mixture, expediently by means of a suitable mixing device.

In order to expedite the foam-forming reacting, both a blowing catalyst and a curing catalyst are preferably included in the formulation. While it is known that some catalysts may promote both blowing and curing, such are conventionally differentiated by their tendency to favor either the urea (blow) reaction, in the case of the blowing catalyst, or the urethane (gel) reaction, in the case of the curing catalyst.

Examples of suitable catalysts that may tend to favor the urea reaction may include bis-(2-dimethylaminoethyl)ether; tris(dialkylaminoalkyl)-s-hexahydrotriazines such as 1,3,5-tris (N,N-dimethylaminopropyl)-s-hexahydrotriazine; pentamethyl-diethylene-triamine; tetraalkyl-ammonium hydroxides such as tetramethylammonium hydroxide; alkali metal hydroxides such as sodium hydroxide; alkali metal alkoxides such as sodium methoxide and potassium isopro-poxide; and alkali metal salts of long-chain fatty acids having 10 to 20 carbon atoms and, in some embodiments, pendant hydroxyl groups. In one embodiment, a combination of bis(dimethylaminoethyl)ether and dipropylene glycol may be an effective blowing catalyst, for example, in a 70/30 weight percent ratio. Combinations of any of the above may also be selected.

Examples of suitable catalysts that may tend to favor the urethane (gel) reaction include, generally, amidines, tertiary amines, organometallic compounds, and combinations thereof. These may include, but are not limited to, amidines such as 1,8-diazabicyclo[5.4.0]undec-7-ene and 2,3-dimethyl-3,4,5,6-tetrahydropyrimidine, and tertiary amines such as triethylamine, tributylamine, dimethylbenzylamine, N-methyl-, N-ethyl-, and N-cyclohexylmorpholine, N,N,N',N'-tetra-methylethylenediamine, N,N,N',N'-tetramethylbutanediamine and -hexanediamine, pentamethyldiethylenetriamine, tetramethyldiaminoethyl ether, bis(dimethylaminopropyl)urea, dimethylpiperazine, dimethylcyclohexylamine, 1,2-dimethyl-imidazole, 1-aza-bicyclo[3.3.0]octane, and, in some preferred embodiments, 1,4-diazabicyclo[2.2.2]octane. Alkanolamine compounds, such as triethanolamine, triisopropanolamine, N-methyl- and N-ethyldiethanolamine, and dimethylethanolamine may also be selected. Combinations of any of the above may also be effectively employed.

Organometallic compounds may include organotin compounds, such as tin(II) salts of organic carboxylic acids, for example, tin(II) diacetate, tin(II) dioctanoate, tin(II) diethylhexanoate, and tin(II) dilaurate, and dialkyltin(IV) salts of organic carboxylic acids, for example, dibutyltin diacetate, dibutyltin dilaurate, dibutyltin maleate and dioctyltin diacetate. Bismuth salts of organic carboxylic acids may also be selected, such as, for example, bismuth octanoate.

The organometallic compounds may be selected for use alone or in combinations, or, in some embodiments, in combination with one or more of the highly basic amines listed hereinabove. In one particular embodiment, the combined amount of the blowing and curing catalysts is greater than 1.7 percent, based on the weight of the polyol formulation.

Another optional additive is a surfactant, or a combination of surfactants. Inclusion of a surfactant in the formulation helps to emulsify the liquid components, regulate cell size, and stabilize the cell structure to prevent collapse and sub-surface voids. Suitable surfactants may include, but are not limited to, silicon-based compounds such as silicone oils and organosilicone-polyether copolymers, such as polydimethyl siloxane and polydimethylsiloxane-polyoxyalkylene block copolymers, for example, polyether modified polydimethyl siloxane Many surfactant products sold under tradenames such as DABCO™ and TEGOSTAB™ may be useful in the inventive formulations.

Additional formulation components may optionally be included, according to the desire of the practitioner. Such may include pigments and colorants; flame retardants; antioxidants; surface modifiers; bioretardant agents; mold release agents; combinations thereof; and the like.

Abrasion modifier additives are often used, particularly in the footwear industry, in order to improve the abrasion resistance of the final polymer. Such additives may include, for example, liquid polybutadiene, such as is described in U.S. Patent No. 5,510,054. Other suitable additives for this purpose include organo-modified siloxanes, such as, for example, TEGOSTAB™ B2114, available from Evonik.

The formulation components may be combined and introduced into a mold or cavity in any way known in the art to produce polyurethane foam. In general, the polyol component is first combined with the water and any auxiliary blowing agents, any selected blowing or curing catalysts, the butanediol chain extender, and any additives such as surfactant to form a "B" side (in Europe, the "A" side), and this "B" side is then quickly contacted with the "A" side (in Europe, the "B" side), in order to begin the polymerization reaction and foaming. It is noted that in certain applications foaming is carried out under conditions suitable to ensure that the final product is a microcellular foam. Those skilled in the art will be aware of various types of apparatus to accomplish the contact while ensuring that an adequate level of mixing occurs to ensure uniformity of the final foam. One way to do this is to use a mixing injection head, wherein the two "sides" of the formulation are combined and mixed and then, more or less simultaneously, injected into the mold or cavity to be filled. The so-called "one shot" injection, wherein the mold or cavity is filled from a single injection point while simultaneously drawing a vacuum from another point, is particularly desirable. The negative pressure of the vacuum maximizes mold- or cavity-filling prior to the formulation's desirably rapid gel time, which in particular embodiments may be less than 25 seconds, and in other embodiments may be less than 20 seconds. Where a mold is used, demolding may be carried out using standard methodologies, and where desirable, suitable external and/or internal mold release agents may be employed.

### EXAMPLES

Table 1 shows the target combination of properties that may be translated to having a pleasant "touch" that is comparable to that of many TPR and VR compounds. Reference information for testing for these properties is shown in Table 2. Standard symbols used therein include >, meaning greater than, and <, meaning less than.

**Table 1**

| PROPERTY | TARGET VALUE |
|---|---|
| Hardness Shore A | 42-50 |
| Density, g/L | 500-650 |
| Storage modulus at 23°C | < 7.5 MPa (at 650 g/L)/ < 6.0 MPa (at 500 g/L) |
| CLD compression load deflection at 5% | < 90 kPa |
| CLD compression load deflection at 25% | > 400 kPa |
| Ball rebound | > 40% |

**Table 2**

| PROPERTY | TEST REFERENCE |
|---|---|
| Hardness Shore A | DIN 53543 |
| Density | ISO 845 |
| Storage modulus at 23°C | DMA, tensile deformation mode, 1Hz |
| CLD compression load deflection | ISO 3386-2 |
| Ball rebound | ASTM D 3574 |

Materials used in the following Examples and Comparative Examples include the following:
- VORANOL™ CP 6001 is a selection for the first polyether polyol. It is a polyoxypropylene polyether polyol having a hydroxyl number of 28, a molecular weight of 6,000 g/mol, and approximately 15 wt% ethylene oxide capping.
- VORANOL™ EP 1900 is a selection for the second polyether polyol. It is a propylene glycol initiated polyether polyol having a hydroxyl number of 28 and a molecular weight of 3,800 g/mol.
- Polyol 1 is SPECFLEX™ NC 700, available from The Dow Chemical Company. It is a styrene acrylonitrile based copolymer polyol having an average hydroxyl number of 20 and in a 3-functional carrier having a molecular weight of 4800 g/mol. It has a solids content of 42 wt%.
- Polyol 2 is a styrene acrylonitrile based copolymer polyol having an average hydroxyl number of 18 and a carrier molecular weight of 4000. It has a solids content of 45 wt%, and it is a diol with 20% EO capping.
- Polyol 3 is a styrene acrylonitrile based copolymer polyol having an average hydroxyl number of 28 and a diol carrier with a molecular weight of 2000 g/mol, capped with 20% EO. It has a solids content of 60 wt%.
- 1,4-butanediol, as a chain extender.
- Crosslinkers, used in limited amount to improve the foam curing, selected from glycerine and diethanolamine (DEOA).
- Catalyst Type 1 is a tertiary amine, DABCO™ 33 LB, solved in butanediol and supplied by Air products.
- Catalyst Type 2 is an organo-tin salt, dibutyltin dilaurate, supplied by Air products as DABCO™ T12N.
- Silicone surfactant is DC 193 available from Dow Corning.
- ISONATE™ 125M is a mixture of 98 percent 4,4'-diphenylmethane diisocyanate and 2 percent 2,4'-diphenylmethane diisocyanate, available from The Dow Chemical Company.
- ISONATE™ 143M is a modified diphenylmethane diisocyanate containing polycarbodiimide adducts available from The Dow Chemical Company.
- Dipropylene glycol (DPG), another chain extender.
- Voranol P1010 propylene oxide based polyol having a molecular weight of 1000 g/mol, hydroxyl number of 110, also available from The Dow Chemical Company.

The isocyanate component used in preparing the polymer has a free NCO content of 18.4% and contains 65% of monomeric 4,4'-diphenylmethane diisocyanate, dipropylene glycol, and a blend of polyether polyols with an average hydroxyl number of 27.5. The weight ratio the dipropylene glycol to the blend of long chain polyols is 0.013:1, but it could vary from 0.01:1 up to 0.25:1 and would be anticipated to be effective. A suitable composition is listed below as Isocyanate Type A.

A second isocyanate composition is included to provide a comparative example. That isocyante is listed below as Isocyanate Type B.

### Procedure

Two isocyanate group-containing prepolymers are prepared. They are designated as "Type A" and "Type B" and are prepared using typical prepolymer methodology from the constituents shown in Table 3.

In a suitable steel or glass reactor the required amount of monomeric 4,4'-diphenylmethane diisocyanate is maintained with stirring at 60 °C. Benzoyl chloride is added as needed in this step to correct the acidity of the Isocyanate.

At a controlled rate the mixture of glycols and polyols is then added to the MDI. The rate of addition is such to maintain a relatively constant reaction temperature. When the addition of the composition is complete, the resulting reaction mixture is stirred at a temperature of 80 °C for an additional 3 hours to ensure completion of reaction.

**Table 3**

| ISOCYANATE COMPONENT STARTING MATERIALS | TYPE A | TYPE B |
|---|---|---|
| Isonate 125 M, wt% | 65.02 | 54.996 |
| Isonate 143 M, wt% | - | 5.996 |
| Voranol EP 1900, wt% | 15.4 | - |
| Voranol P 1010, wt% | - | 15.00 |
| Voranol CP 6001, wt% | 15.4 | 24.00 |
| Dipropylene glycol, wt% | 4.1 | - |
| Benzoyl chloride, wt% | 0.008 | 0.008 |
| NCO content, % | 18.4 | 18.4 |

| | | |
|---|---|---|
| - means not included. | | |

Four (4) different polyol components are then prepared by mixing at room temperature the constituents shown in Table 4, to prepare formulations designated as Examples 1-3 and Comparative Example 1 and 2.

**Table 4**

| STARTING MATERIALS | Example 1 | Example 2 | Example 3* | Example 4 | Comparative Example 2 |
|---|---|---|---|---|---|
| Voranol EP 1900, wt% | 30.640 | 12.240 | 57.28 | 12.240 | 63.83 |
| Voranol CP 6001, wt% | 27.50 | 25.60 | - | 25.10 | 16.91 |
| Polyol 1, wt% | - | - | 35.66 | - | 12.00 |
| Polyol 2, wt% | - | 55.60 | - | 55.60 | - |
| Polyol 3, wt% | 35.10 | - | - | - | - |
| 1,4-butanediol, wt% | 4.60 | 4.40 | 4.90 | 4.90 | 9.5 |
| Catalyst Type 1, wt% | 1.30 | 1.30 | 1.30 | 1.30 | 1.30 |
| Catalyst Type 2, wt% | 0.010 | 0.010 | 0.010 | 0.010 | 0.010 |
| Silicone surfactant, wt% | 0.20 | 0.20 | 0.20 | 0.20 | 0.20 |
| Crosslinker, wt% | 0.20 | 0.20 | 0.20 | 0.20 | - |
| Water, pbw | 0.45 | 0.45 | 0.45 | 0.45 | 0.45 |
| Isocyanate | Type A | Type A | Type A | Type B | Type A |

| | | | | | |
|---|---|---|---|---|---|
| - means not included. *not according to the invention. | | | | | |

The formulations are used to prepare microcellular polyurethane foam by reacting them with an Isocyanate component. They are then subjected to testing according to the tests identified in Table 2, and also tensile strength (in Newtons per square millimeter, N/mm²) and flex fatigue resistance at -15 °C (in kilocycles, Kcycles), both according to DIN 53543. DMA analyses are done by using a TA Instruments DMA (Dynamic Mechanical Analyzer) Q800 equipped with a liquid nitrogen cooling system (LNCS), in tensile deformation mode. Specimens are prepared by removing a 1.4-1.7 mm thick layer from the surface of the original material, then cutting the removed layer to rectangular geometry of 25 millimeters (mm) x 7 mm. Experimental conditions include isothermal temperature at -50°C for 2 minutes; temperature ramp from -50 °C to 100 °C at 2 °C per minute; frequency 1 hertz (Hz), preload 0.01 Newtons (N); strain 15 micrometers (µm), force track 125 percent; gauge distance about 20 mm; and cooling agent liquid nitrogen. The testing results are shown in Table 5.

**Table 5**

| Properties | Example 1 | Example 2 | Example 3* | Example 4 | Comparative Example 2 |
|---|---|---|---|---|---|
| Hardness (Shore A) | 46 | 47 | 48 | 45 | 53 |
| Density | 550 | 550 | 550 | 550 | 550 |
| Storage Modulus at 23 °C | 4.54 | 4.66 | 5.78 | 4.10 | 11.40 |
| CLD 5% of deformation, kPa | 65 | 77 | 78 | 67 | 125 |
| CLD 25% of deformation, kPa | 483 | 492 | 415 | 464 | 471 |
| Ball rebound, % | 48 | 46 | 55 | 50 | 59 |
| Tensile strength, N/mm² | 4.55 | 4.60 | 4.10 | 3.50 | 4.45 |
| Flex fatigue resistance (-15 °C) | >100 Kcycles | >100 Kcycles | 30 Kcycles | 50 Kcycles | >100 Kcycles |
| Hand feeling (subjective) | Soft pleasant touch | Soft pleasant touch | Soft pleasant touch | Soft pleasant touch | Dry and "plastic" touch |

| | | | | | |
|---|---|---|---|---|---|
| *not according to the invention. | | | | | |

The results in Table 5 show that formulations lacking, or including an insufficient amount, of copolymer polyol as required the present invention have generally lower compressive strengths unless surface hardness is increased, while the inventive formulations provide relatively higher compressive strengths at lower surface hardness.

Example 1 and Example 2 differ as to type of copolymer polyol used. The material based on Polyol 3 (Example 1) shows better performance in terms of low surface hardness and high resistance to compression at 25% of the deformation.

## Claims

1. A formulation for preparing a polyurethane foam comprising
(a) a polyol component including at least
(i) from 1 to 40 wt%, based on the polyol component, of a first polyether polyol, having a hydroxyl value from 25 to 30, a nominal functionality of 3, and a molecular weight of from 5000 to 7000 g/mol,
the first polyether polyol being prepared from propylene oxide capped with ethylene oxide, having from 70 to 90 wt% primary hydroxyl groups;
(ii) from 10 to 60 wt%, based on the polyol component, of a second polyether polyol, having a hydroxyl value of from 25 to 30, a nominal functionality of 2, and a molecular weight of from 3000 to less than 5000 g/mol,
the second polyether polyol being prepared from propylene oxide capped with ethylene oxide and having from 80 to 98 wt% primary hydroxyl groups;
(iii) from 2 to 7 wt%, based on the polyol component, of monoethylene glycol, 1,4-butanediol, hexanediol or neopentylglycol as a chain extender; and
(iv) from 25 to 65 wt%, based on the polyol component, of a copolymer polyether polyol having a styrene acrylonitrile solids content of at least 40 wt% and an average hydroxyl number of at least 18;
(b) an isocyanate component, comprising a prepolymer having an isocyanate equivalent weight of from 180 to 300, prepared by reacting a monomeric 4,4' diphenylmethane-diisocyanate and an isocyanate-reactive component; and
(c) water as a blowing agent.

2. The formulation of Claim 1 wherein the first polyether polyol comprises polymerized propylene glycol capped with ethylene oxide in a wt% ratio of 85/15.

3. The formulation of Claim 1 wherein the second polyether polyol comprises polymerized propylene glycol capped with ethylene oxide in a wt% ratio of 80/20.

4. The formulation of Claim 1 wherein the first polyol is present in an amount of from 20 to 30 wt%; the second polyol is present in an amount of from 10 to 40 wt%; the chain extender is present in an amount from 3 to 5 wt%; and the copolymer polyol is present in an amount of from 30 to 60 wt%.

5. The formulation of Claim 1 wherein the isocyanate-reactive component includes
(a) a branched diol or triol having a molecular weight from 60 to 300 g/mol; and
(b) a polyoxyalkylene polyol having an average functionality from 2 to 4 and a molecular weight of from 3000 to 9000 g/mol;
wherein (a) and (b) are present in a parts by weight ratio of from 0.01:1 to 0.25:1.

6. The formulation of Claim 1 wherein the isocyanate component is prepared by reacting a monomeric 4,4' diphenylmethane-diisocyanate and an isocyanate-reactive component including an ethylene oxide-capped diol having a molecular weight of 4000; an ethylene oxide-capped triol having a molecular weight of 6000; and a second chain extender selected from dipropylene glycol, tripropylene glycol, or a mixture thereof; under conditions suitable to form a prepolymer.

7. The formulation of Claim 1 further including a second blowing agent selected from the group consisting of alkanes; cycloalkanes; dialkyl ethers; cycloalkylene ethers; fluoroalkanes; and mixtures thereof.

8. A process for preparing a polyurethane microcellular foam comprising reacting under foam-forming conditions
(a) a polyol component including at least
(i) from 1 to 40 wt%, based on the polyol component, of a first polyether polyol, having a hydroxyl value from 25 to 30, a nominal functionality of 3, and a molecular weight of from 5000 to 7000 g/mol,
the first polyether polyol being prepared from propylene oxide capped with ethylene oxide and having from 70 to 90 wt% primary hydroxyl groups;
(ii) from 10 to 60 wt%, based on the polyol component, of a second polyether polyol, having a hydroxyl value of from 25 to 30, a nominal functionality of 2, and a molecular weight of from 3000 to less than 5000 g/mol,
the second polyether polyol being prepared from propylene oxide capped with ethylene oxide and having from 80 to 98 wt% primary hydroxyl groups;
(iii) from 2 to 7 wt%, based on the polyol component, of monoethylene glycol, butanediol, hexanediol or neopentylglycol as a chain extender; and
(iv) from 25 to 65 wt%, based on the polyol component, of a copolymer polyether polyol having a styrene acrylonitrile solids content of at least 40 wt% and an average hydroxyl number of at least 18;
(b) an isocyanate component, comprising a prepolymer having an isocyanate equivalent weight of from 180 to 300, prepared by reacting a monomeric 4,4' diphenylmethane-diisocyanate and an isocyanate-reactive component; and
(c) water as a blowing agent;
to form a polyurethane foam.

9. A polyurethane foam preparable by the process of Claim 8 having, at a density of 550 g/L as measured according to ISO 845, a Shore A surface hardness of not greater than 50 as measured according to DIN 53543; a storage modulus of less than 6.0 MPa as measured by Dynamic Mechanical Analysis (DMA) wherein experimental conditions include an isothermal temperature at -50°C for 2 minutes, a temperature ramp from -50 °C to 100 °C at 2 °C per minute, a frequency of 1 Hz, a preload of 0.01 N, a strain of 15 µm, a force track of 125%, a gauge distance of 20 mm and liquid nitrogen as a cooling agent; a resistance to compression at 5% of the deformation of less than 85 kPa as measured by the compression load deflection (CLD) test according to ISO 3386-2; a resistance to compression at 25% of the deformation of greater than 410 kPa as measured by the compression load deflection (CLD) test according to ISO 3386-2; and a tensile strength of greater than 4.00 N/mm² as measured according to DIN 53543.

## Patentansprüche

1. Eine Formulierung zum Herstellen eines Polyurethanschaums, beinhaltend
(a) eine Polyolkomponente, die mindestens Folgendes umfasst:
(i) bezogen auf die Polyolkomponente, zu 1 bis 40 Gew.-% ein erstes Polyetherpolyol mit einem Hydroxylwert von 25 bis 30, einer nominellen Funktionalität von 3 und einem Molekulargewicht von 5000 bis 7000 g/mol,
wobei das erste Polyetherpolyol aus mit Ethylenoxid verkapptem Propylenoxid hergestellt ist und zu 70 bis 90 Gew.-% primäre Hydroxylgruppen aufweist;
(ii) bezogen auf die Polyolkomponente, zu 10 bis 60 Gew.-% ein zweites Polyetherpolyol mit einem Hydroxylwert von 25 bis 30, einer nominellen Funktionalität von 2 und einem Molekulargewicht von 3000 bis weniger als 5000 g/mol,
wobei das zweite Polyetherpolyol aus mit Ethylenoxid verkapptem Propylenoxid hergestellt ist und zu 80 bis 98 Gew.-% primäre Hydroxylgruppen aufweist;
(iii) bezogen auf die Polyolkomponente, zu 2 bis 7 Gew.-% Monoethylenglykol, 1,4-Butandiol, Hexandiol oder Neopentylglykol als Kettenverlängerer; und
(iv) bezogen auf die Polyolkomponente, zu 25 bis 65 Gew.-% ein Copolymerpolyetherpolyol mit einem Styrol-Acrylnitril-Feststoffgehalt von mindestens 40 Gew.-% und einer durchschnittlichen Hydroxylzahl von mindestens 18;
(b) eine Isocyanatkomponente, beinhaltend ein Präpolymer mit einem Isocyanatäquivalentgewicht von 180 bis 300, hergestellt durch das Zur-Reaktion-Bringen eines monomeren 4,4'-Diphenylmethandiisocyanats und einer isocyanatreaktiven Komponente; und
(c) Wasser als Treibmittel.

2. Formulierung gemäß Anspruch 1, wobei das erste Polyetherpolyol polymerisiertes Propylenglykol beinhaltet, das mit Ethylenoxid in einem Gew.-%-Verhältnis von 85 : 15 verkappt ist.

3. Formulierung gemäß Anspruch 1, wobei das zweite Polyetherpolyol polymerisiertes Propylenglykol beinhaltet, das mit Ethylenoxid in einem Gew.-%-Verhältnis von 80 : 20 verkappt ist.

4. Formulierung gemäß Anspruch 1, wobei das erste Polyol in einer Menge von 20 bis 30 Gew.-% vorhanden ist; das zweite Polyol in einer Menge von 10 bis 40 Gew.-% vorhanden ist; der Kettenverlängerer in einer Menge von 3 bis 5 Gew.-% vorhanden ist; und das Copolymerpolyol in einer Menge von 30 bis 60 Gew.-% vorhanden ist.

5. Formulierung gemäß Anspruch 1, wobei die isocyanatreaktive Komponente Folgendes umfasst:
(a) ein verzweigtes Diol oder Triol mit einem Molekulargewicht von 60 bis 300 g/mol; und
(b) ein Polyoxyalkylenpolyol mit einer durchschnittlichen Funktionalität von 2 bis 4 und einem Molekulargewicht von 3000 bis 9000 g/mol;
wobei (a) und (b) in einem Gewichtsteilverhältnis von 0,01 : 1 bis 0,25 : 1 vorhanden sind.

6. Formulierung gemäß Anspruch 1, wobei die Isocyanatkomponente hergestellt wird durch das Zur-Reaktion-Bringen eines monomeren 4,4'-Diphenylmethandiisocyanats und einer isocyanatreaktiven Komponente, die ein mit Ethylenoxid verkapptes Diol mit einem Molekulargewicht von 4000, ein mit Ethylenoxid verkapptes Triol mit einem Molekulargewicht von 6000 und einen zweiten Kettenverlängerer, ausgewählt aus Dipropylenglykol, Tripropylenglykol oder einer Mischung davon, umfasst, unter Bedingungen, die zum Bilden eines Präpolymers geeignet sind.

7. Formulierung gemäß Anspruch 1, ferner umfassend ein zweites Treibmittel, ausgewählt aus der Gruppe, bestehend aus Alkanen, Cycloalkanen, Dialkylethern, Cycloalkylenethern, Fluoralkanen und Mischungen davon.

8. Ein Verfahren zum Herstellen eines mikrozellulären Polyurethanschaums, beinhaltend das Zur-Reaktion-Bringen von Folgendem unter schaumbildenden Bedingungen:
(a) einer Polyolkomponente, die mindestens Folgendes umfasst:
(i) bezogen auf die Polyolkomponente, zu 1 bis 40 Gew.-% ein erstes Polyetherpolyol mit einem Hydroxylwert von 25 bis 30, einer nominellen Funktionalität von 3 und einem Molekulargewicht von 5000 bis 7000 g/mol,
wobei das erste Polyetherpolyol aus mit Ethylenoxid verkapptem Propylenoxid hergestellt ist und zu 70 bis 90 Gew.-% primäre Hydroxylgruppen aufweist;
(ii) bezogen auf die Polyolkomponente, zu 10 bis 60 Gew.-% ein zweites Polyetherpolyol mit einem Hydroxylwert von 25 bis 30, einer nominellen Funktionalität von 2 und einem Molekulargewicht von 3000 bis weniger als 5000 g/mol,
wobei das zweite Polyetherpolyol aus mit Ethylenoxid verkapptem Propylenoxid hergestellt ist und zu 80 bis 98 Gew.-% primäre Hydroxylgruppen aufweist;
(iii) bezogen auf die Polyolkomponente, zu 2 bis 7 Gew.-% Monoethylenglykol, Butandiol, Hexandiol oder Neopentylglykol als Kettenverlängerer; und
(iv) bezogen auf die Polyolkomponente, zu 25 bis 65 Gew.-% ein Copolymerpolyetherpolyol mit einem Styrol-Acrylnitril-Feststoffgehalt von mindestens 40 Gew.-% und einer durchschnittlichen Hydroxylzahl von mindestens 18;
(b) einer Isocyanatkomponente, beinhaltend ein Präpolymer mit einem Isocyanatäquivalentgewicht von 180 bis 300, hergestellt durch das Zur-Reaktion-Bringen eines monomeren 4,4'-Diphenylmethandiisocyanats und einer isocyanatreaktiven Komponente; und
(c) Wasser als Treibmittel;
um einen Polyurethanschaum zu bilden.

9. Ein durch das Verfahren gemäß Anspruch 8 herstellbarer Polyurethanschaum, der Folgendes aufweist: bei einer Dichte von 550 g/l, wie gemäß ISO 845 gemessen, eine Shore-A-Oberflächenhärte von nicht mehr als 50, wie gemäß DIN 53543 gemessen; einen Speichermodul von weniger als 6,0 MPa, wie durch dynamisch-mechanische Analyse (DMA) gemessen, wobei die experimentellen Bedingungen eine isotherme Temperatur bei -50 ° für 2 Minuten, eine Temperaturrampe von -50 °C bis 100 °C mit 2 °C pro Minute, eine Frequenz von 1 Hz, eine Vorlast von 0,01 N, eine Dehnung von 15 µm, ein Force Track (Kraftanpassung) von 125 %, einen Messabstand von 20 mm und flüssigen Stickstoff als Kühlmittel umfassen; einen Widerstand gegenüber Kompression bei 5 % der Verformung von weniger als 85 kPa, wie durch den Stauchhärte(CLD = Compression Load Deflection)-Test gemäß ISO 3386-2 gemessen; einen Widerstand gegenüber Kompression bei 25 % der Verformung von mehr als 410 kPa, wie durch den Stauchhärte(CLD)-Test gemäß ISO 3386-2 gemessen; und eine Zugfestigkeit von mehr als 4,00 N/mm², wie gemäß DIN 53543 gemessen.

## Revendications

1. Une formulation pour préparer une mousse polyuréthane comprenant
(a) un constituant polyol incluant au moins
(i) de 1 à 40 % en poids, rapporté au constituant polyol, d'un premier polyéther de polyol, ayant un indice d'hydroxyle allant de 25 à 30, une fonctionnalité nominale de 3, et une masse moléculaire allant de 5 000 à 7 000 g/mol,
le premier polyéther de polyol étant préparé à partir d'oxyde de propylène coiffé par de l'oxyde d'éthylène, ayant de 70 à 90 % en poids de groupes hydroxyle primaires ;
(ii) de 10 à 60 % en poids, rapporté au constituant polyol, d'un deuxième polyéther de polyol, ayant un indice d'hydroxyle allant de 25 à 30, une fonctionnalité nominale de 2, et une masse moléculaire allant de 3 000 à moins de 5 000 g/mol,
le deuxième polyéther de polyol étant préparé à partir d'oxyde de propylène coiffé par de l'oxyde d'éthylène et ayant de 80 à 98 % en poids de groupes hydroxyle primaires ;
(iii) de 2 à 7 % en poids, rapporté au constituant polyol, de monoéthylène glycol, de 1,4-butanediol, d'hexanediol ou de néopentylglycol en tant qu'allongeur de chaîne ; et
(iv) de 25 à 65 % en poids, rapporté au constituant polyol, d'un copolymère de polyéther de polyol ayant une teneur en matières solides styrène acrylonitrile d'au moins 40 % en poids et un nombre d'hydroxyle moyen d'au moins 18 ;
(b) un constituant isocyanate, comprenant un prépolymère ayant une masse équivalente d'isocyanate allant de 180 à 300, préparé par la réaction d'un 4,4'-diphénylméthane-diisocyanate monomère et d'un constituant réactif aux isocyanates ; et
(c) de l'eau en tant qu'agent gonflant.

2. La formulation de la revendication 1 dans laquelle le premier polyéther de polyol comprend le propylène glycol polymérisé coiffé par de l'oxyde d'éthylène dans un rapport % en poids de 85/15.

3. La formulation de la revendication 1 dans laquelle le deuxième polyéther de polyol comprend du propylène glycol polymérisé coiffé par de l'oxyde d'éthylène dans un rapport % en poids de 80/20.

4. La formulation de la revendication 1 dans laquelle le première polyol est présent en une quantité allant de 20 à 30 % en poids ; le deuxième polyol est présent en une quantité allant de 10 à 40 % en poids ; l'allongeur de chaîne est présent en une quantité allant de 3 à 5 % en poids ; et le copolymère de polyol est présent en une quantité allant de 30 à 60 % en poids.

5. La formulation de la revendication 1 dans laquelle le constituant réactif aux isocyanates inclut
(a) un diol ou triol ramifié ayant une masse moléculaire de 60 à 300 g/mol ; et
(b) un polyoxyalkylène de polyol ayant une fonctionnalité moyenne allant de 2 à 4 et une masse moléculaire allant de 3 000 à 9 000 g/mol ;
dans laquelle (a) et (b) sont présents dans un rapport parties en poids allant de 0,01/1 à 0,25/1.

6. La formulation de la revendication 1 dans laquelle le constituant isocyanate est préparé par la réaction d'un 4,4'-diphénylméthane-diisocyanate et d'un constituant réactif aux isocyanates incluant un diol coiffé par de l'oxyde d'éthylène ayant une masse moléculaire de 4 000 ; un triol coiffé par de l'oxyde d'éthylène ayant une masse moléculaire de 6 000 ; et un deuxième allongeur de chaîne sélectionné parmi le dipropylène glycol, le tripropylène glycol, ou un mélange de ceux-ci ; dans des conditions favorables à la formation d'un prépolymère.

7. La formulation de la revendication 1 incluant en outre un deuxième agent gonflant sélectionné dans le groupe constitué d'alcanes ; de cycloalcanes ; d'éthers de dialkyle ; d'éthers de cycloalkylène ; de fluoroalcanes ; et de mélanges de ceux-ci.

8. Un procédé pour préparer une mousse microcellulaire de polyuréthane comprenant la réaction dans des conditions de formation de mousse
(a) d'un constituant polyol incluant au moins
(i) de 1 à 40 % en poids, rapporté au constituant polyol, d'un premier polyéther de polyol, ayant un indice d'hydroxyle allant de 25 à 30, une fonctionnalité nominale de 3, et une masse moléculaire allant de 5 000 à 7 000 g/mol,
le premier polyéther de polyol étant préparé à partir d'oxyde de propylène coiffé par de l'oxyde d'éthylène et ayant de 70 à 90 % en poids de groupes hydroxyle primaires ;
(ii) de 10 à 60 % en poids, rapporté au constituant polyol, d'un deuxième polyéther de polyol, ayant un indice d'hydroxyle de 25 à 30, une fonctionnalité nominale de 2, et une masse moléculaire allant de 3 000 à moins de 5 000 g/mol,
le deuxième polyéther de polyol étant préparé à partir d'oxyde de propylène coiffé par de l'oxyde d'éthylène et ayant de 80 à 98 % en poids de groupes hydroxyle primaires ;
(iii) de 2 à 7 % en poids, rapporté au constituant polyol, de monoéthylène glycol, de butanediol, d'hexanediol ou de néopentylglycol en tant qu'allongeur de chaîne ; et
(iv) de 25 à 65 % en poids, rapporté au constituant polyol, d'un copolymère de polyéther de polyol ayant une teneur en matière solides styrène acrylonitrile d'au moins 40 % en poids et un nombre d'hydroxyle moyen d'au moins 18 ;
(b) d'un constituant isocyanate, comprenant un prépolymère ayant une masse équivalente d'isocyanate allant de 180 à 300, préparé par la réaction d'un 4,4'-diphénylméthane-diisocyanate monomère et d'un constituant réactif aux isocyanates ; et
(c) de l'eau en tant qu'agent gonflant ;
afin de former une mousse polyuréthane.

9. Une mousse polyuréthane pouvant être préparée par le procédé de la revendication 8 ayant, à une masse volumique de 550 g/L telle que mesurée conformément à l'ISO 845, une dureté de surface Shore A ne dépassant pas 50 telle que mesurée conformément à la DIN 53543 ; un module de conservation inférieur à 6,0 MPa tel que mesuré par analyse mécanique dynamique (AMD), les conditions expérimentales incluant une température isotherme à -50 °C pendant 2 minutes, une progression de température de -50 °C à 100 °C à 2 °C par minute, une fréquence de 1 Hz, une précontrainte de 0,01 N, un allongement de 15 µm, une trajectoire de force de 125 %, une distance entre repères de 20 mm et de l'azote liquide en tant qu'agent de refroidissement ; une résistance à la compression à 5 % de la déformation inférieure à 85 kPa telle que mesurée par le test de contrainte-déformation en compression (CLC) conformément à l'ISO 3386-2 ; une résistance à la compression à 25 % de la déformation supérieure à 410 kPa telle que mesurée par le test de contrainte-déformation en compression (CLC) conformément à l'ISO 3386-2 ; et une résistance à la traction supérieure à 4,00 N/mm² telle que mesurée conformément à la DIN 53543.
